# EUROPÄISCHE PATENTSCHRIFT

(11) **EP 0 407 741 B1**
(45) Veröffentlichungstag und Bekanntmachung des Hinweises auf die Patenterteilung: **13.10.1993**
(21) Anmeldenummer: 90110968.6
(22) Anmeldetag: 09.06.1990
(51) Int. Cl.: B60N 2/48, B60R 21/13

(54) **Kopfstütze für Rücksitze**
Head restraint for rear seats
Appui-tête pour sièges arrières

(30) Priorität: 08.07.1989 DE 3922509
(43) Veröffentlichungstag der Anmeldung: 16.01.1991
(73) Patentinhaber: DAIMLER-BENZ AKTIENGESELLSCHAFT, 70327 Stuttgart (DE)
(72) Erfinder: Lütze, Hans, D-7042 Aidlingen (DE); Ast, Günther, D-7240 Horb (DE); Gerber, Ulrich, D-7277 Wildberg 5 (DE)

(56) Entgegenhaltungen:
- DE-A- 3 822 461
- DE-U- 8 523 831
- DE-U- 9 001 215
- US-A- 3 292 726

## Beschreibung

Die Erfindung betrifft eine Kopfstütze für Rücksitze nach dem Oberbegriff des Anspruchs 1.

In der derzeit noch nicht veröffentlichten DE-A-3 822 461 ist eine Kopfstütze für Fahrzeugsitze beschrieben, die an einem in fahrzeugfesten Führungen höhenverschiebbaren, U-förmigen Überrollbügel festgelegt ist. Hierbei ist jedem Fahrzeugsitz jeweils ein Überrollbügel zugeordnet, welcher hinter dem Sitz am Fahrzeugboden abgestützt ist. Die Abstützung einer höhenverstellbaren Kopfstütze über einen Überrollbügel am Fahrzeugboden ist ausgeprägt stabil, und im Prinzip einfach zu verwirklichen. Diese Kombination einer Kopfstütze mit einem Überrollbügel weist aber den Nachteil auf, daß der Überrollbügel hinter der Sitzlehne im Fußraum viel Platz wegnimmt, da auf jeden Fall erreicht werden muß, daß die Kopfstütze nahe dem oberen Sitzlehnenende an die Sitzlehne anschließt. Der daraus resultierende räumliche Abstand des Überrollbügels vom Sitz nahe dem Fahrzeugboden kann sogar dazu führen, daß ein derartiger Überrollbügel in diesem Bereich überhaupt keinen Platz für seine Festlegung findet, oder aber den Einbauraum für weitere Karosserieteile oder Aggregate beeinträchtigt.

Der Erfindung liegt die Aufgabe zugrunde, eine gattungsgemäße Kopfstütze unfallsicher mit einem Überrollbügel zu kombinieren, und dabei möglichst wenig Bauraum im Kraftfahrzeug zu verbrauchen.

Die Aufgabe wird durch die kennzeichnenden Merkmale des Anspruchs 1 gelöst.

Durch die weite Überspannung der Innenraumbreite können die Schenkel des Überrollbügels nahe oder an den seitlichen Längsträgern am Karosserieboden festgelegt werden, wodurch eine stabile Abstützung erreicht wird, ohne daß diese Festlegung zusätzlicher Verstärkungsteile bedarf. Dabei verlaufen die Schenkel des Überrollbügels mit einem sitzseitigen Krümmungsmittelpunkt gleichmäßig gebogen entlang der Rückseite des Rücksitzes, wodurch der Überrollbügel nur einen Mindesteinbauraum hinter der Rücksitzlehne einnimmt, und dennoch seine Hochfahrbewegung in Stützstellung weiterhin ermöglicht ist.

Durch diese günstige Anordnung des Überrollbügels kann auch die Kopfstütze besonders formschön im Fahrzeuginnenraum integriert werden. Zum einen dadurch, daß die Kopfstütze zusammen mit dem Überrollbügel weitgehendst bis unter eine sichtbare obere Abschlußkante der Karosserieseitenwände absenkbar ist, so daß die Kopfstütze in abgesenktem Zustand nicht sichtbar ist, während sie bei hochgefahrenem Überrollbügel ohne Zwischenraum an eine Rücksitzlehne anschließt, und den Kopf eines Insassen beliebiger Größe stützt.

Die Gegenstände der weiteren Ansprüche bilden vorteilhafte Ausgestaltungen der Gegenstände vorherstehender Ansprüche.

Ein Ausführungsbeispiel der Erfindung ist in der Zeichnung dargestellt.

Es zeigen:
- Fig. 1: das Heckteil einer Cabriolet-Karosserie mit einer hochgefahrenen und strichpunktiert dargestellt mit einer abgesenkten Kopfstütze, und
- Fig. 2: in Seitenansicht einen Längsschnitt im Bereich eines Schenkels eines Überrollbügels im Fond eines Fahrzeugs eingebaut.

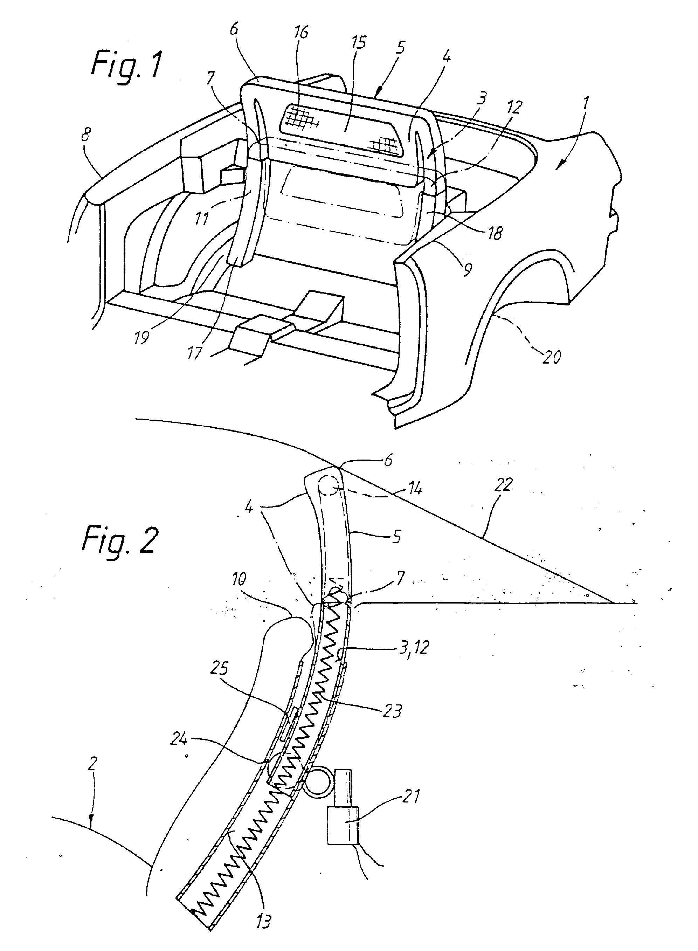

In Fig. 1 ist das Heckteil einer Cabriolet-Karosserie 1 gezeichnet, in dem sich hinter einem Einbauraum für einen hier nicht dargestellten Rücksitz 2 ein U-förmiger Überrollbügel 3 befindet, um dessen Oberteil ein Kopfstützenpolster 4 einer Kopfstütze 5 geschäumt ist, die mit dem Überrollbügel 3 in der Höhe verschiebbar ist. Die Kopfstütze 5 und der Überrollbügel 3 sind hier in einer hochgefahrenen Stützstellung 6 des Überrollbügels 3 und strichpunktiert gezeichnet in einer abgesenkten Lage 7 zu sehen, in der die Kopfstütze 5 größtenteils unterhalb einer sichtbaren, oberen Abschlußkante einer Karosserieseitenwand 8 bzw. 9 liegt, und deshalb von außerhalb betrachtet die Kontur der Fahrzeugkarosserie 1 optisch nicht beeinträchtigt.

Da die Kopfstütze 5 nahe einer Rücksitzlehne 10 den Rücksitz 2 in der Höhe verlängern soll, und damit durch den die Kopfstütze stützenden, höhenverstellbaren Überrollbügel 3 nicht zu viel Bauraum hinter dem Rücksitz 2 versperrt wird, sind seitliche Schenkel 11 und 12 des Überrollbügels 3, wie in Fig. 2 für einen Schenkel 12 dargestellt, entlang einer rückwärtigen Rücksitzlehnenwand 13 derart gleichmäßig gekrümmt ausgebildet, daß der Krümmungsmittelpunkt sitzseitig liegt. Außerdem schließt die Kopfstütze 5 in Stützstellung 6 des Überrollbügels 3 ohne Zwischenraum an die Rücksitzlehne 10 an, so daß für einen auf dem Rücksitz 2 sitzenden Insassen beliebiger Größe eine Abstützung seines Kopfes durch die Kopfstütze 5 bzw. durch die Rücksitzlehne 10 im Notfall gewährleistet ist.

Eine günstige Fertigung dieser Kombination aus Kopfstütze 5 und Überrollbügel 3 ergibt sich dadurch, daß das Kopfstützenpolster 4 um das mittige Bügelteil 14 geschäumt werden kann, und soweit es für sinnvoll erachtet wird auch den Überrollbügel 3 entlang seiner Erstreckung in Fahrzeugbreite einteilig umschließt.

Aus optischen Gründen ist das Kopfstützenpolster 4 im mittleren Bereich mit einem lichten Durchbruch 15 versehen, der, um Zugluft zu vermeiden, mit einem Gewebe 16 oder auch einer Folie ausgefüllt wird. Der Überrollbügel 3, der die Kopfstütze 5 sicher abstützt, überspannt weitgehend die Innenraumbreite der Fahrzeugkarosserie 1 und damit schützend die auf dem Rücksitz 2 sitzenden Insassen, und kann deshalb über seine, jeweils einen Schenkel 11 bzw. 12 aufnehmenden Führungsrohre 17 und 18 an einem seitlichen Längsträger 19 bzw. 20 am Fahrzeugboden und bei Bedarf an den Karosserieseitenwänden 8 bzw. 9 zusätzlich festgelegt werden, wodurch keine zusätzlichen Verstärkungsteile für die sichere Abstützung des Überrollbügels 3 im Fahrzeug mehr notwendig werden.

Der Überrollbügel 3 bleibt auch mit seinen gleichmäßig konkav gewölbten Schenkein 11 und 12 in seinen ebenso gewölbten Führungsrohren 17 und 18 in der Höhe verschiebbar, was durch einen am Überrollbügel 3 angreifenden, regelbaren Antrieb 21 geschieht, der hier in seiner Ausführung nur angedeutet ist, und der in bekannter Weise z.B. durch ein Zahnradgetriebe verwirklicht werden kann, welches auf eine Zahnstange am Überrollbügel 3 wirkt. Für die schnelle Ausfahrbewegung des Überrollbügels 3 in Stützstellung 6, die bis an die Kontur eines angedeuteten Verdecks 22 heranreicht, ist ein ebenfalls geläufiger schneller Austrieb mittels einer Druckfeder 23 vorgesehen.

Für eine leichte Verschiebebewegung der Schenkel 11 und 12 in ihren Führungsrohren 17 bzw. 18 sind an jedem Schenkel 11 bzw. 12 zwei Rollen 24 und 25 gelagert, die mit ihren Drehachsen etwa senkrecht zueinander ausgerichtet sind, und die die Schenkel 11 und 12 des Überrollbügels 3 in allen Belastungsrichtungen gegen die Wände der im Querschnitt viereckigen Führungsrohre 17 bzw. 18 abstützen können.

## Patentansprüche

1. Kopfstütze für Rücksitze, insbesondere von Cabriolets, welche an einem aus einer abgesenkten Lage in eine Stützstellung hochfahrbaren, U-förmigen Überrollbügel festgelegt und mit diesem verschiebbar ist,
**dadurch gekennzeichnet,**
daß der Überrollbügel (3) weitgehend die Innenraumbreite des Fahrzeugs überspannt, und daß die seitlichen Schenkel (11 und 12) des Überrollbügels (3) hinter einer Rücksitzlehne (10) gleichmäßig derart gekrümmt verlaufen, daß der Krümmungsmittelpunkt sitzseitig liegt.

2. Kopfstütze für Rücksitze nach Anspruch 1,
**dadurch gekennzeichnet,**
daß die Kopfstütze (5) bei abgesenktem Überrollbügel (3) größtenteils unterhalb einer sichtbaren, oberen Abschlußkante einer Karosserieseitenwand (8 bzw. 9) liegt.

3. Kopfstütze für Rücksitze nach Anspruch 1,
**dadurch gekennzeichnet,**
daß die Kopfstütze (5) in Stützstellung (6) des Überrollbügels (3) ohne Zwischenraum an eine Rücksitzlehne (10) anschließt.

4. Kopfstütze für Rücksitze nach einem der vorherstehenden Ansprüche,
**dadurch gekennzeichnet,**
daß ein Kopfstützenpolster (4) um den Überrollbügel (3) geschäumt ist.

5. Kopfstütze für Rücksitze nach einem der vorherstehenden Ansprüche,
**dadurch gekennzeichnet,**
daß die Kopfstütze (5) den Überrollbügel (3) entlang seiner Erstreckung in Fahrzeugbreite einteilig umschließt.

6. Kopfstütze für Rücksitze nach Anspruch 5,
**dadurch gekennzeichnet,**
daß die Kopfstütze (5) im mittleren Bereich einen lichten Durchbruch (15) aufweist, der mit einem durchsichtigen Material (16) ausgefüllt ist.

7. Kopfstütze für Rücksitze nach Anspruch 1,
**dadurch gekennzeichnet,**
daß der Überrollbügel (3) mittels einer Druckfeder (23) schnell in seine Stützstellung (6) überführbar ist, und daß am Überrollbügel (3) zusätzlich ein regelbarer Antrieb (21) angreift, durch den dieser langsam verschiebbar ist.

8. Kopfstütze für Rücksitze nach Anspruch 1,
**dadurch gekennzeichnet,**
daß jeweils einen Schenkel (11 bzw. 12) des Überrollbügels (3) aufnehmende, gebogene Führungsrohre (17 und 18) an seitlichen Längsträgern (19 bzw. 20) am Fahrzeugboden oder/ und an Karosserieseitenwänden (8 bzw. 9) abgestützt sind.

9. Kopfstütze für Rücksitze nach einem der Ansprüche 1 oder 8,
**dadurch gekennzeichnet,**
daß die Schenkel (11 und 12) des Überrollbügels (3) durch daran gelagerte Rollen (24 und 25) in allen Belastungsrichtungen gegen die Wände der Führungsrohre (17 bzw. 18) abgestützt verschiebbar sind.

## Claims

1. Head restraint for rear seats, in particular of convertibles, which is attached to, and can be displaced with, a U-shaped roll-over bar which can be raised from a lowered state into a support position, characterized in that the roll-over bar (3) to a large extent spans the width of the interior of the vehicle, and in that the lateral legs (11 and 12) of the roll-over bar (3) can stand behind a rear-seat rest (10), evenly curved such that the centre of curvature lies on the seat side.

2. Head restraint for rear seats according to Claim 1, characterized in that, when the roll-over bar (3) is lowered, the head restraint (5) lies for the most part beneath a visible upper rim of a lateral bodywork wall (8 and 9 respectively).

3. Head restraint for rear seats according to Claim 1, characterized in that, in the support position (6) of the roll-over bar (3), the head restraint (5) adjoins a rear-seat rest (10) without any gap.

4. Head restraint for rear seats according to one of the preceding claims, characterized in that a head-restraint padding (4) is foamed around the roll-over bar (3).

5. Head restraint for rear seats according to one of the preceding claims, characterized in that the head restraint (5) surrounds the roll-over bar (3) along its extension in the width of the vehicle.

6. Head restraint for rear seats according to Claim 5, characterized in that the head restraint (5) has in the central region a clear opening (15) which is filled in by a transparent material (16).

7. Head restraint for rear seats according to Claim 1, characterized in that the roll-over bar (3) can be transferred rapidly into its support position (6) by means of a pressure spring (23), and in that an adjustable drive (21), by means of which the roll-over bar (3) can be displaced slowly, additionally acts on the latter.

8. Head restraint for rear seats according to Claim 1, characterized in that bent guide tubes (17 and 18), each accommodating one leg (11 and 12 respectively), of the roll-over bar (3) are supported on lateral frame rails (19 and 20 respectively) on the vehicle floor or/and on lateral bodywork walls (8 and 9 respectively).

9. Head restraint for rear seats according to either of Claims 1 or 8, characterized in that the legs (11 and 12) of the roll-over bar (3) can be displaced by rollers (24 and 25) mounted thereon in all directions of stress, supported against the walls of the guide tubes (17 and 18 respectively).

## Revendications

1. Appui-tête pour sièges arrières, en particulier de cabriolets, pouvant être relevé, d'une position descendue en une position d'appui, fixé à un arceau de sécurité en U et déplacable avec celui-ci, caractérisé en ce que l'arceau de sécurité (3) fait la plus grande partie de la largeur de l'habitacle du véhicule et en ce que les branches latérales (11 et 12) de l'arceau de sécurité (3) s'étendent derrière un dossier de siège arrière (10), avec une incurvation identique, de telle façon que le centre de courbure soit situé du coté du siège.

2. Appui-tête pour sièges arrières selon la revendication 1, caractérisé en ce que, lorsque l'arceau de sécurité (3) est abaissé, la plus grande partie de l'appui-tête (5) est située au dessous d'une arête supérieure de limitation visible d'une paroi latérale de carrosserie (8, respectivement 9).

3. Appui-tête pour sièges arrières selon la revendication 1, caractérisé en ce que, dans la position d'appui (6) de l'arceau de sécurité (3), l'appui-tête (5) se raccorde sans espace intermédiaire à un dossier de siège (10).

4. Appui-tête pour sièges arrières selon l'une des revendications précédente, caractérisé en ce qu'un coussin d'appui-tête (4) est réalisé en matériau alvéolaire, autour de l'arceau de sécurité (3).

5. Appui-tête pour sièges arrières selon l'une des revendications précédentes, caractérisé en ce que l'appui-tête (5) entoure l'arceau de sécurité (3) sur son étendue, d'un seul tenant, sur la largeur du véhicule.

6. Appui-tête pour sièges arrières selon la revendication (5), caractérisé en ce que l'appui-tête (5) présente dans la zone centrale un passage libre (15), rempli d'un matériau (16) transparent.

7. Appui-tête pour siège arrières selon la revendication (1), caractérisé en ce que l'arceau de sécurité (3) est susceptible de passer rapidement à sa position d'appui (6), au moyen d'un ressort de pression (23), et en ce qu'en plus, un entraînement (21) réglable, au moyen duquel l'appui-tête (3) est déplacable à vitesse lente, agit sur ce dernier.

8. Appui-tête pour siège arrières, caractérisé en ce que des tubes de guidages (17) et (18) pliés et incurvés, recevant chacun une branche (11, respectivement 12) de l'arceau de sécurité (3), prennent appui des supports longitudinaux (19, respectivement 20) latéraux, sur le plancher du véhicule et/ou sur des parois latérales de carrosserie (8, respectivement 9).

9. Appui-tête pour siège arrières selon l'une des revendications 1 ou 8, caractérisé en ce que les branches (11 et 12) de l'arceau de sécurité (3) sont déplaçables, au moyen de galets (24 et 25) tournants, dans toutes les directions de sollicitation, en prenant appui contre les parois des tubes de guidages (17, respectivement 18).
